# EUROPÄISCHE PATENTSCHRIFT

(11) **EP 2 909 055 B1**
(45) Veröffentlichungstag und Bekanntmachung des Hinweises auf die Patenterteilung: **14.12.2016**
(21) Anmeldenummer: 13783483.4
(22) Anmeldetag: 17.10.2013
(51) Int. Cl.: B60K 37/06, G06F 3/0354, G06F 3/044, G06F 3/0488, B60K 35/00

(54) **BEDIENELEMENT FÜR EINEN KRAFTWAGEN UND VERFAHREN ZUR HERSTELLUNG EINES DERARTIGEN BEDIENELEMENTS**
CONTROL ELEMENT FOR AN AUTOMOBILE VEHICLE AND METHOD FOR PRODUCING SUCH A CONTROL ELEMENT
ÉLÉMENT DE COMMANDE POUR VÉHICULE AUTOMOBILE ET PROCÉDÉ DE FABRICATION D'UN TEL ÉLÉMENT

(30) Priorität: 19.10.2012 DE 102012020609
(43) Veröffentlichungstag der Anmeldung: 26.08.2015
(73) Patentinhaber: Audi AG, 85045 Ingolstadt (DE)
(72) Erfinder: WACHINGER, Michael, 86571 Winkelhausen (DE); SCHNEIDER, Johann, 85139 Wettstetten (DE); KÜHNE, Marcus, 85051 Ingolstadt (DE); MÜLLER, Ulrich, 85055 Ingolstadt (DE)
(74) Vertreter: Brandt, Kai
(86) Internationale Anmeldenummer: PCT/EP2013/003130
(87) Internationale Veröffentlichungsnummer: WO 2014/060108

(56) Entgegenhaltungen:
- EP-A1- 0 930 806
- EP-A2- 2 444 878
- EP-A2- 2 562 630
- US-A1- 2009 267 921

## Beschreibung

Die Erfindung betrifft ein Bedienelement für einen Kraftwagen nach dem Oberbegriff von Patentanspruch 1, sowie ein Verfahren zum Herstellen eines solchen Bedienelements nach dem Oberbegriff von Patentanspruch 7.

Flächige Bedienelemente, wie beispielsweise Touchscreens oder Touchpads, finden als Mittel zur Eingabe von Benutzerinstruktionen zunehmend Anwendung in Kraftwagen, beispielsweise zur Steuerung von Navigations- und Entertainmentsystemen und dergleichen.

Auf einem solchen Bedienelement sind in der Regel mehrere Bereiche vorgesehen, bei deren Berührung jeweils unterschiedliche Funktionen aktiviert werden. Je nach Betriebszustand kann sich dabei Anordnung und funktionale Belegung dieser Bereiche ändern. Im Fahrtbetrieb des Kraftwagens ist es jedoch nicht wünschenswert, wenn der Fahrer seinen Blick von der Fahrbahn abwenden muss, um das Bedienelement zuverlässig benutzen zu können.

Aus der DE 10 2010 042 690 A1 ist zu entnehmen, dass auf einer keramischen Oberfläche eines berührungssensitiven Bedienelements durch mechanische Bearbeitung, wie beispielsweise Läppen, Sandstrahlen oder dergleichen haptische Strukturen aufgebracht werden. Solche Strukturen ermöglichen es dem Benutzer, einzelne Teilbereiche des Bedienelements zu ertasten, ohne den Blick von der Fahrbahn abwenden zu müssen.

Eine solche mechanische Bearbeitung kann jedoch die strukturelle Integrität der Bedienoberfläche schwächen, so dass es bei mechanischer Belastung schnell zum Bruch kommen kann, was wiederum eine teure Reparatur nötig macht.

Darüber hinaus offenbart die US 2009/0267921 A1 eine programmierbare taktile berührungssensitve Anzeige und Mensch-Maschine-Schnittstellen für eine verbesserte Fahrzeuggeräteausstattung und Telemetrie.

Die EP 2 562 630 A2 offenbart eine Bedienvorrichtung.

Der vorliegenden Erfindung liegt daher die Aufgabe zugrunde, ein Bedienelement nach dem Oberbegriff von Patentanspruch 1 sowie ein Verfahren zu dessen Herstellung nach dem Oberbegriff von Patentanspruch 8 bereitzustellen, welche eine besonders gute mechanische Belastbarkeit sicherstellen.

Ein solches Bedienelement für einen Kraftwagen, umfasst eine Bedienoberfläche zur Eingabe von Benutzerinstruktionen für eine Komponente des Kraftwagens, welche zumindest ein von einem Benutzer ertastbares Oberflächenstrukturelement aufweist.

Erfindungsgemäß ist dabei vorgesehen, dass die Bedienoberfläche aus Glas und das zumindest eine Oberflächenstrukturelement einstückig mit der Bedienoberfläche ausgebildet ist. Im Gegensatz zu aus dem Stand der Technik bekannten Keramikoberflächen ist im Falle von Glas keine mechanische und insbesondere keine spanabhebende Behandlung notwendig, um derartige Oberflächenstrukturelemente zu schaffen. Bei der Herstellung durch Ur- oder Umformen entstehen deutlich geringere Materialbelastungen als bei der spanenden Verarbeitung, so dass ein deutlich haltbareres, insbesondere kratz- und abriebfestes Bedienelement geschaffen wird.

Das zumindest eine Oberflächenstrukturelement ist durch Tiefziehen der Bedienoberfläche im erwärmten Zustand ausgebildet. Hierdurch können auf prozesssichere Weise nahezu beliebig geformte Oberflächenstrukturen geschaffen werden, die nach dem anschließenden Erhärten die gewünschte Kratz- und Abriebfestigkeit besitzen.

Das Bedienelement selbst kann hierbei als Touchscreen oder Touchpad ausgebildet sein. Hier ist die Verwendung von haptischen Oberflächenstrukturen besonders zweckmäßig, um ein Abwenden der Aufmerksamkeit des Fahrers von der Fahrbahn zu vermeiden. Selbstverständlich können derart strukturierte Bedienoberflächen auch für Druckschalter, Schiebeschalter, Drehregler oder dergleichen Anwendung finden.

In weiterer Ausgestaltung der Erfindung wird durch das zumindest eine Oberflächenstrukturelement eine Teilbedienfläche der Bedienoberfläche abgrenzt und/oder markiert. Dies erleichtert das Auffinden solcher Teilbedienflächen durch den Fahrer allein auf Grundlage haptischer Informationen.

Alternativ oder zusätzlich kann das zumindest eine Obeflächenstrukturelement auch als Designelement dienen und die optische Anmutung des Bedienelements verbessern.

In weiterer Ausgestaltung der Erfindung ist die Bedienoberfläche in zumindest einer Raumrichtung gewölbt. Auch solche Bedienoberflächen können kostengünstig und sicher durch Tiefziehen erzeugt werden und können auf optisch besonders ansprechende Art in ebenfalls gewölbte Armaturenbretter, Mittelkonsolen oder dergleichen integriert werden.

Die Erfindung betrifft ferner ein Verfahren zum Herstellen eines Bedienelements der oben beschriebenen Art. Erfindungsgemäß wird dabei das zumindest eine Oberflächenstrukturelement durch Tiefziehen der Bedienoberfläche im erwärmten Zustand erzeugt. Auch hier treffen die vorstehend erläuterten Vorteile zu.

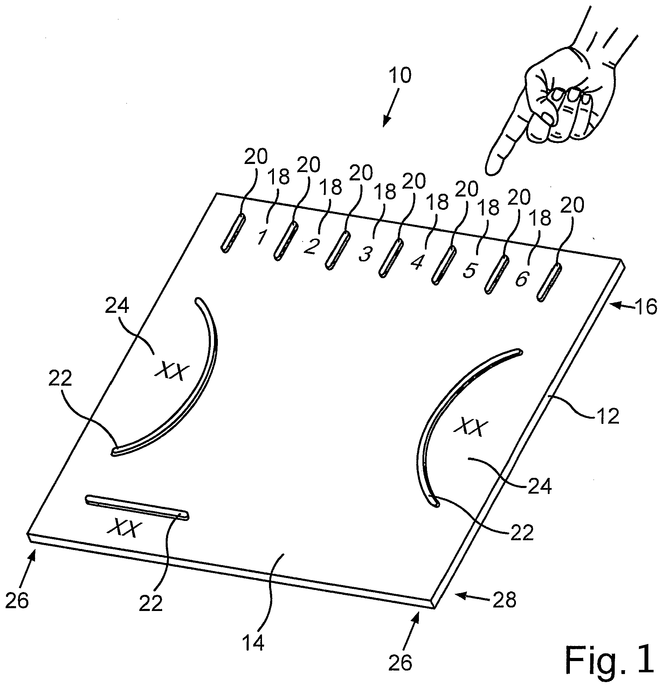

Im Folgenden wird die Erfindung und ihre Ausführungsformen anhand der Zeichnung näher erläutert. Die einzige Figur zeigt dabei ein Ausführungsbeispiel eines erfindungsgemäßen Bedienelements.

Ein im Ganzen mit 10 bezeichnetes Bedienelement für einen Kraftwagen umfasst eine Platte 12 aus Glas, die die berührungssensitive Oberfläche 14 eines nicht weiter im Detail dargestellten Touchscreens oder Touchpads ausbildet.

In einem ersten Teilbereich 16 des Bedienelements ist eine Reihe von Bedienfeldern 18 vorgesehen, die je nach Betriebszustand mit unterschiedlichen Funktionen belegt werden können, die bei Berührung beispielsweise unterschiedliche Aspekte eines Navigationssystems oder Entertainmentsystems oder aber auch sonstige Funktionen des Kraftwagens ansteuern können.

Um eine rein haptische Erkennung der Bedienfelder 18 durch den Fahrer zu ermöglichen, so dass dieser zur Bedienung seinen Blick nicht von der Fahrbahn abwenden muss, sind die Bedienfelder 18 durch jeweilige, seitlich angeordnete Oberflächenstrukturen 20 abgegrenzt, die sich von der Oberfläche 14 abheben. Weitere Oberflächenstrukturen 22 grenzen zusätzliche Bedienbereiche 24 in den Seitenbereichen 26 und dem unteren Bereich 28 des Bedienelements 10 ab.

Um die Oberflächenstrukturen 20, 22 zu erzeugen, wird die Platte 12 zunächst im planen Zustand bereitgestellt und in einem entsprechenden Werkzeug über ihre Erweichungstemperatur erhitzt. Das Werkzeug weist zwei Werkzeughälften mit komplementären Ausnehmungen und Vertiefungen auf, die den Oberflächenstrukturen 20, 22 entsprechen. Durch Schließen der Werkzeughälften wird die Platte dann im erweichten Zustand in die gewünschte Form gebracht und durch Abkühlen wieder ausgehärtet.

Die Oberflächenstrukturen 20, 22 können dabei in nahezu beliebiger Höhe zur Oberfläche 14 gestaltet werden. Insbesondere können verschiedene Oberflächenstrukturen 20, 22 auch unterschiedliche Höhen und unterschiedliche Oberflächenbeschaffenheiten, wie beispielsweise Riffelungen, Narbungen, Symboliken oder dergleichen aufweisen, um dem Benutzer des Bedienelements 10 weitere haptische Hinweise zu geben, die ihm die Bedienung erleichtern. Die Oberflächenstrukturen 20, 22 müssen dabei nicht, wie in der Figur gezeigt, in jedem Fall als Erhebungen über der Oberfläche 14 ausgebildet sein, sondern können auch der Oberfläche 14 gegenüber vertieft sein.

Auch in der horizontalen Erstreckung der Oberflächenstrukturen 20, 22 besteht ein weiter Gestaltungsspielraum. So können einfache Stege, Bögen oder komplexere geometrische Figuren erzeugt werden, die neben der haptischen Unterstützung des Benutzers auch Designfunktionen übernehmen und die optische Anmutung des Bedienelements verbessern können.

Die Oberfläche 14 kann auch zusätzlich vollständig mit einer Narbung versehen werden. Dies erleichtert das Gleiten des Fingers des Bedieners über die Oberfläche 14 und verhindert die Ausbildung von Fingerabdrücken.

Beim Tiefziehen ist es ferner möglich, der Oberfläche 14 bzw. der gesamten Platte 12 eine Krümmung zu verleihen, so dass sie auf optisch ansprechende Weise in ein ebenfalls gekrümmtes Armaturenbrett oder dgl. eingesetzt werden kann.

Derart gestaltete Oberflächenstrukturen 20, 22 eignen sich nicht nur, wie beschrieben, für die Gestaltung von Touchscreens oder Touchpads, sondern können auch auf beliebigen anderen Bedienelementen 10, wie beispielsweise Druckschaltern, Schiebeschaltern, Drehreglern oder dergleichen aufgebracht werden, die durch die Glas- und Keramikoberfläche eine besonders hochwertige und haltbare Gestaltung erhalten.

## Patentansprüche

1. Bedienelement (10) für einen Kraftwagen, mit einer Bedienoberfläche (14) zur Eingabe von Benutzerinstruktionen für eine Komponente des Kraftwagens, welche zumindest ein von einem Benutzer ertastbares Oberflächenstrukturelement (20, 22) aufweist, wobei die Bedienoberfläche (14) aus Glas und das zumindest eine Oberflächenstrukturelement (20, 22) einstückig mit der Bedienoberfläche (14) ausgebildet ist, **dadurch gekennzeichnet, dass** das zumindest eine Oberflächenstrukturelement (20, 22) durch Tiefziehen der Bedienoberfläche (14) im erwärmten Zustand ausgebildet ist.

2. Bedienelement (10) nach Anspruch 1,
**dadurch gekennzeichnet, dass**
das Bedienelement (10) ein Touchscreen oder Touchpad ist.

3. Bedienelement (10) nach Anspruch 1,
**dadurch gekennzeichnet, dass**
das Bedienelement (10) ein Druckschalter, Schiebeschalter, Drehregler oder dgl. ist.

4. Bedienelement (10) nach einem der Ansprüche 1 bis 3,
**dadurch gekennzeichnet, dass**
das zumindest eine Oberflächenstrukturelement (20, 22) eine Teilbedienfläche (18) der Bedienoberfläche (14) abgrenzt und/oder markiert.

5. Bedienelement (10) nach einem der Ansprüche 1 bis 4,
**dadurch gekennzeichnet, dass**
das zumindest eine Oberflächenstrukturelement (20, 22) ein Designelement ist.

6. Bedienelement (10) nach einem der Ansprüche 1 bis 5,
**dadurch gekennzeichnet, dass**
die Bedienoberfläche (14) in zumindest einer Raumrichtung gewölbt ist.

7. Verfahren zum Herstellen eines Bedienelements (10) nach einem der Ansprüche 1 bis 6,
**dadurch gekennzeichnet, dass**
das zumindest eine Oberflächenstrukturelement (20, 22) durch Tiefziehen der Bedienoberfläche (14) im erwärmten Zustand ausgebildet wird.

## Claims

1. Operating element (10) for a motor vehicle, having an operator interface (14) for inputting user instructions for a component of the motor vehicle, which interface comprises at least one surface structural element (20, 22) that can be touched by a user, wherein the operator interface (14) is constructed from glass and the at least one surface structural element (20, 22) is constructed in one piece with the operator interface (14), **characterised in that** the at least one surface structural element (20, 22) is constructed by deep drawing the operator interface (14) in the heated state.

2. Operating element (10), according to claim 1
**characterised in that**
the operating element (10) is a touchscreen or touchpad.

3. Operating element (10), according to claim 1
**characterised in that**
the operating element (10) is a pressure switch, slide switch, control dial or the like.

4. Operating element (10), according to any one of claims 1 to 3
**characterised in that**
the at least one surface structural element (20, 22) defines and/or marks a partial operating area (18) of the operator interface (14).

5. Operating element (10), according to any one of claims 1 to 4
**characterised in that**
the at least one surface structural element (20, 22) is a design element.

6. Operating element (10), according to any one of claims 1 to 5
**characterised in that**
the operator interface (14) is curved in at least one direction.

7. Method for producing an operating element (10) according to any one of claims 1 to 6,
**characterised in that**
the at least one surface structural element (20, 22) is constructed by deep drawing the operator interface (14) in the heated state.

## Revendications

1. Élément de commande (10) pour un véhicule à moteur, comprenant une surface de commande (14) pour l'entrée d'instructions d'utilisateur pour un composant du véhicule à moteur, laquelle surface de commande présente au moins un élément de structure de surface (20, 22) pouvant être touché par un utilisateur, la surface de commande (14) étant conçue en verre et l'au moins un élément de structure de surface (20, 22) étant réalisé d'une seule pièce avec la surface de commande (14), **caractérisé en ce que** l'au moins un élément de structure de surface (20, 22) est réalisé par emboutissage à chaud de la surface de commande (14).

2. Élément de commande (10) selon la revendication 1,
**caractérisé en ce que**
l'élément de commande (10) est un écran tactile ou un pavé tactile.

3. Élément de commande (10) selon la revendication 1,
**caractérisé en ce que**
l'élément de commande (10) est un interrupteur à poussoir, un interrupteur à curseur, un régulateur rotatif ou tout autre élément analogue.

4. Élément de commande (10) selon l'une quelconque des revendications 1 à 3,
**caractérisé en ce que**
l'au moins un élément de structure de surface (20, 22) délimite et/ou marque une surface de commande partielle (18) de la surface de commande (14).

5. Élément de commande (10) selon l'une quelconque des revendications 1 à 4,
**caractérisé en ce que**
l'au moins un élément de structure de surface (20, 22) est un élément esthétique.

6. Élément de commande (10) selon l'une quelconque des revendications 1 à 5,
**caractérisé en ce que**
la surface de commande (14) est courbe dans au moins une direction spatiale.

7. Procédé pour la fabrication d'un élément de commande (10) selon l'une quelconque des revendications 1 à 6,
**caractérisé en ce que**
l'au moins un élément de structure de surface (20, 22) est réalisé par emboutissage à chaud de la surface de commande (14).
